(19) Europäisches Patentamt

European Patent Office

Office européen des brevets

(11) **EP 1 054 580 A1**

(12) **EUROPÄISCHE PATENTANMELDUNG**

(43) Veröffentlichungstag:
**22.11.2000 Patentblatt 2000/47**

(51) Int. Cl.$^7$: **H05B 41/231**

(21) Anmeldenummer: **00107631.4**

(22) Anmeldetag: **08.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.05.1999 DE 19923265**

(71) Anmelder:
**Patent-Treuhand-Gesellschaft für elektrische Glühlampen mbH**
**81543 München (DE)**

(72) Erfinder: **Bönigk, Michael**
**10245 Berlin (DE)**

(54) **Schaltungsanordnung zur Zündung und zum Betrieb von Hochdrucklampen**

(57) Eine Schaltungsanordnung zur Zündung und zum Betrieb von Hochdrucklampen stellt der Entladungslampe eine erhöhte Übernahmespannung zur Verfügung. Die erhöhte Übernahmespannung wird durch Spannungsverdopplung an einer Gleichrichtereinheit mittels eines in zwei einzelne Kondensatoren (C1, C2) aufgetrennten Ladekondensators LK erzeugt, wobei der gemeinsame Mittelpunkt M der Kondensatoren C1, C2 mit einem der beiden Netzeingänge der Gleichrichtereinheit verbunden ist.

**FIG. 1**

Printed by Xerox (UK) Business Services
2.16.7 (HRS)/3.6

## Beschreibung

## Technisches Gebiet

Die Erfindung geht aus von einer Schaltungsanordnung zur Zündung und zum Betrieb von Hochdrucklampen gemäß dem Oberbegriff des Anspruchs 1. Es handelt sich dabei insbesondere um Hoch- und Höchstdruckentladungslampen, die wegen ihrer guten Lichtausbeute zunehmend Verbreitung in allen Bereichen der Beleuchtungstechnik finden. Bedingt durch ihre speziellen Eigenschaften ist ihre Zündung und ihr Betrieb meist schwierig. Dies gilt insbesondere für Natriumhochdrucklampen mit relativ hohem Xenondruck. Durch ihre hervorragende Lichtausbeute eignen sich diese Lampen besonders gut für Straßenbeleuchtungen. Hierbei ersetzen sie häufig bestehende Systeme mit wesentlich geringerem Wirkungsgrad, beispielsweise Quecksilberdampflampen. Bei dieser Problemstellung ist zusätzlich auch das Problem der Leistungsreduktion (bei gleichem Lichtstrom) zu lösen, wodurch sich insgesamt eine Energieeinsparung ergibt.

## Stand der Technik

Aus der DE-A 34 26 491 ist bereits eine Schaltungsanordnung zur Zündung und zum Betrieb von Hochdrucklampen bekannt, bei der dem Gleichstromausgang der Gleichrichtereinheit ein Reihenglied unmittelbar oder höchstens über ein ohmsches Vorschaltelement nachgeschaltet ist. Das Reihenglied enthält neben der Hochdruckentladungslampe ein induktives Filter. Eine Zündung von Lampen mit hohem Kaltfülldruck ist damit nur schlecht möglich.

Das Problem der erschwerten Zündung von Hochduckentladungslampen, insbesondere bei den Natriumhochdrucklampen, wurde bisher auf unterschiedlichste Weise gelöst. Näheres hierzu findet sich in der Parallelanmeldung.

- Spezielle Zündhilfen haben den Nachteil, daß sie nicht immer ausreichend sind.

- Sehr breite, energiereiche Zündimpulse haben den Nachteil von großen, aufwendigen und teuren Zündinduktivitäten im EVG.

- Bei der Bereitstellung erhöhter Übernahmespannungen durch Hochsetzsteller, zusätzliche Hochfrequenztransformatoren etc. tritt der Nachteil auf, daß dies technisch aufwendig und kostenintensiv ist. Bei ständig anliegender hoher Zwischenkreisspannung treten erhebliche Verluste in den Bauelementen auf. Außerdem ist der Einsatz überdimensionierter Bauelemente notwendig.

- Zündgasgemische haben den Nachteil, daß sich die lichttechnischen Eigenschaften der Lampe verschlechtern.

## Darstellung der Erfindung

Es ist Aufgabe der vorliegenden Erfindung, eine Schaltungsanordnung gemäß dem Oberbegriff des Anspruchs 1 bereitzustellen, die eine schnelle und einfache Zündung einer Hochdruckentladungslampe ermöglicht, insbesondere bei Systemen ohne aktive Oberwellenfilter.

Diese Aufgabe wird durch die kennzeichnenden Merkmale des Anspruchs 1 gelöst. Besonders vorteilhafte Ausgestaltungen finden sich in den abhängigen Ansprüchen.

Hoch- und Höchstdruckentladungslampen finden wegen ihrer guten Lichtausbeute zunehmend Verbreitung in allen Bereichen der Beleuchtungstechnik. Bedingt durch ihre speziellen Eigenschaften ist ihre Zündung und ihr Betrieb aber oftmals problematisch. Dies gilt beispielsweise insbesondere für Natriumhochdrucklampen mit sehr hohen Xenondrücken (Kaltfülldruck über 1 atm, insbesondere bei ca. 2 atm). Durch ihre hervorragende Lichtausbeute eignen sich diese besonders für Straßenbeleuchtungen. Um eine weitere Energieeinsparung (auch im Vorschaltgerät) zu erzielen, wird zunehmend ein elektronischer Betrieb dieser Lampen angestrebt. Um die geforderten Parameter hinsichtlich Zündspannung, Übernahmespannung, Oberwellengehalt etc. zu gewährleisten, sind aber technisch sehr aufwendige und teilweise kostenintensive Schaltungsvarianten für die elektronischen Vorschaltgeräte notwendig. Dieses gilt insbesondere für die Zündung dieser Lampen.

Die vorgeschlagene Schaltungsanordnung ist besonders für den Einsatz bei Systemen ohne zusätzliche aktive Oberwellenfilterung geeignet. Das ist dann der Fall, wenn lediglich kleine oder gar keine Ladekondensatoren in der elektronischen Schaltung verwendet werden. Sie ermöglicht die Zündung und Übernahme von ansonsten schwer zündbaren Hochdrucklampen mit äußerst geringem technischen Aufwand.

Erfindungsgemäß wird die Aufgabe durch eine Schaltungsanordnung gelöst, bei der die Lampe zur Übernahme des Entladungsbogens nach erfolgtem Durchschlag eine Übernahmespannung, die höher als die übliche Leerlaufspannung ist, bereitgestellt wird. Ohne erheblichen Schaltungsaufwand ist die Leerlaufspannung normalerweise der Spitzenwert der Netzwechselspannung. Diese Erhöhung wird durch eine Anhebung, insbesondere Verdopplung, der Zwischenkreisspannung realisiert. Nach erfolgter Übernahme der Lampe sinkt die Zwischenkreisspannung wieder auf den Normalwert der (gleichgerichteten) Netzwechselspannung ab.

Die Schaltungsanordnung unterscheidet sich von den üblichen Ausführungen dadurch, daß sie technisch sehr einfach und somit äußerst kostengünstig realisierbar ist. Sie kommt ohne die sonst üblichen aktiven Komponenten wie Hochsetzsteller, Ladungspumpen etc. oder zusätzliche Hochfrequenztransformatoren aus. Im Lampenbetrieb nach erfolgter Übernahme besteht keine erhöhte Zwischenkreisspannung mehr, wodurch die internen Verluste der Schaltung vermindert werden.

**Figuren**

Im folgenden soll die Erfindung anhand mehrerer Ausführungsbeispiele näher erläutert werden. Es zeigen:

> Figur 1 das Prinzipschaltbild einer erfindungsgemäßen Schaltungsanordnung
> Figur 2 bis 7 weitere Ausführungsbeispiele einer Schaltungsanordnung

**Beschreibung der Zeichnungen**

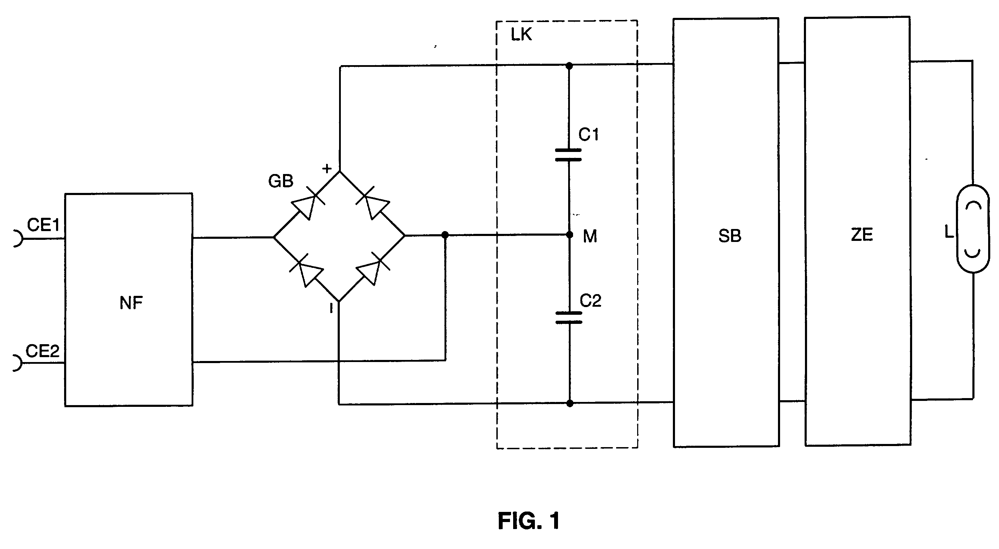

In Fig. 1 ist die grundlegende Schaltungsausführung dargestellt. Die damit zu zündende und zu betreibende Lampe L ist beispielsweise eine Natriumhochdrucklampe mit 70 W Leistung. Die Schaltungsanordnung besteht aus vier Schaltungsblöcken.

Zunächst erfolgt die Netzfilterung der zwischen den Klemmen CE1 und CE2 anliegenden Netzspannung (240 V) mittels des Schaltkreises NF. Dieser ist zur Funktion der erfindungsgemäßen Schaltungsanordnung nicht unbedingt erforderlich. Der erste Schaltungsblock kann außerdem noch weitere Schaltungsmittel wie eine Phasenan- oder abschnittschaltung (bevorzugt mittels Triac oder Thyristor) und evtl. eine strombegrenzende Induktivität umfassen.

Danach erfolgt eine Netzgleichrichtung mittels einer Grätzbrücke GB, wie an sich bekannt.

Erfindungsgemäß ist als Spannungsverdopplerschaltung der nachfolgende Ladekondensator LK in zwei separate Kondensatoren (C1, C2) aufgeteilt, die bevorzugt gleich groß sind, wobei der gemeinsame Mittelpunkt M der beiden Kondensatoren mit einem der beiden Netzeingänge der Grätzbrücke verbunden ist. Der jeweils andere Kontakt der beiden Kondensatoren ist mit dem Masse- bzw. Pluspotential der gleichgerichteten Netzspannung verbunden. Hierdurch entsteht eine Spannungsverdopplerschaltung, welche im unbelasteten Zustand, wenn die Lampe noch nicht gezündet hat, den Spitzenwert der doppelten Netzeingangsspannung bereitstellt, also

$$U_{0max\_unbelastet} = 2 \sqrt{2}\ U_{Netz\_eff}.$$

Hinter dem Ladekondensatorblock LK ist noch ein Schaltkreis zur Strombegrenzung SB sowie eine Zündeinrichtung ZE vorgesehen. Meist wird eine Halbbrücke oder Vollbrücke mit Hochfrequenzinduktivität zur Strombegrenzung verwendet. Die Zündeinrichtung ist bevorzugt ein Überlagerungszündkreis. Weitere strombegrenzende Bauteile (Induktivitäten) können der Schaltung vorangestellt sein.

Die Belastbarkeit der Spannungsverdopplerschaltung ist direkt proportional der Kapazität der Kondensatoren C1, C2, d.h. bei Fließen eines Laststromes $I_L$ sinkt die (Spitzen-) Spannung $\dot{U}_0$ ab auf minimal

$$\dot{U}_0 = \sqrt{2}\ U_{Netz\_eff}.$$

Dieser Effekt kann gezielt zur Einstellung der Zwischenkreisspannung $U_0$ eingesetzt werden, damit im Lampenbetrieb die Verluste an den aktiven elektronischen Bauelementen und Induktivitäten (z.B. bei Halb- oder Vollbrückenschaltungen) möglichst gering sind. Die Zwischenkreisspannung liegt am Ausgang der Grätzbrücke zwischen deren Masse und deren Pluspol bzw. Minuspol an. Sie soll im Lampenbetrieb nur so hoch wie unbedingt erforderlich sein.

Die Kapazitätswerte für die Kondensatoren C1, C2 richten sich also im wesentlichen nach der geforderten abzugebenden Leistung (z.B. für die Zündeinrichtung) im Betriebszustand, die zwischen dem Einfachen und Doppelten der Netzeingangsspannung liegt (wenn die Lampe nicht gezündet ist, dann ist $U_0$ gleich der Übernahmespannung für die Lampe), sowie der geforderten Spannung $U_0$ für den Betriebszustand

$$U_0 \geq \sqrt{2}\ U_{Netz\_eff}.\text{(Lampe brennt).}$$

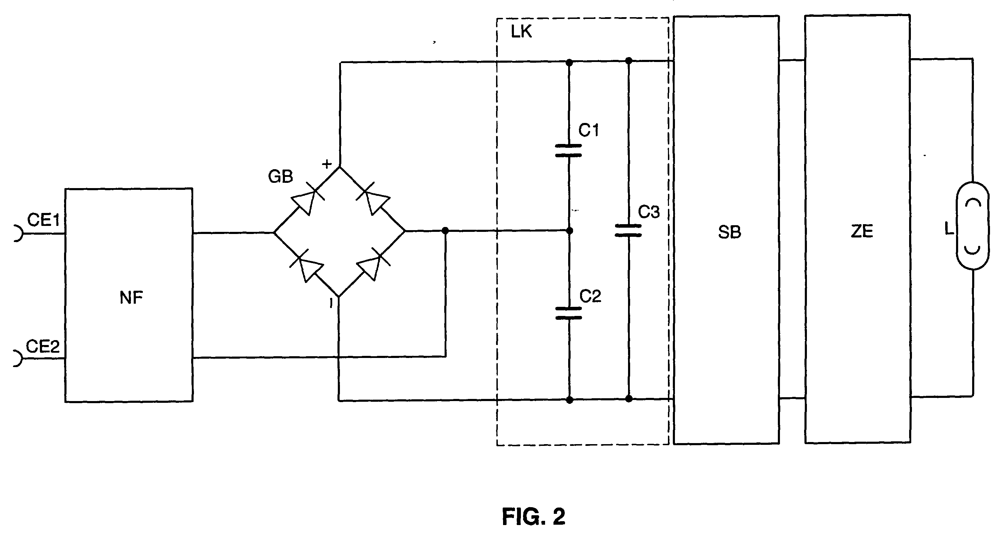

In Fällen, in denen eine größere Kapazität für den gesamten Ladekondensatorblock LK als nach den oben genannten Dimensionierungebedingungen gewünscht wird, kann eine zusätzliche, bevorzugt eine nicht aufgeteilte, Kapazität C3 (siehe Fig. 2) parallel zu C1 und C2 eingefügt werden. Diese lädt sich im unbelasteten Kreis (Lampe nicht gezündet) auf die überhöhte Spannung

$$2\sqrt{2}\ U_{Netz\_eff} \geq U_0 > \sqrt{2}\ U_{Netz\_eff}$$

entsprechend den Parametern von C1, C2 auf. Für die Übernahme steht so eine entsprechend hohe Spannung mit großer Energiereserve (entsprechend den Werten der Kapazität C1, C2 und C3) zur Verfügung. Im Lampenbetrieb ist somit eine entsprechende Glättung der gleichgerichteten Netzspannung möglich. Bei sehr kleinen Kapazitätswerten der Kondensatoren C1, C2, C3 ergibt sich für das Fließen eines Laststromes $I_L$ (wenn die Lampe brennt) u. U. eine pulsierende Gleichspannung.

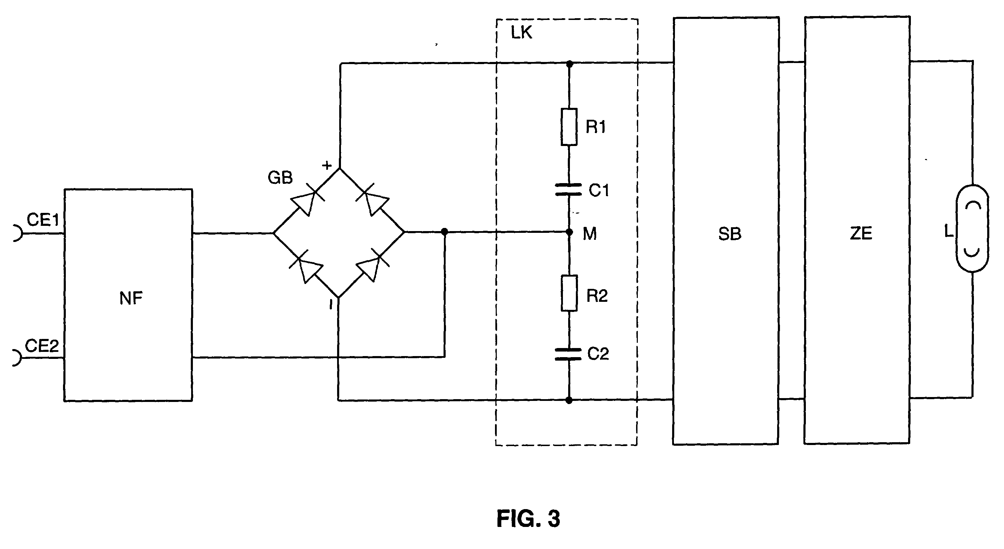

Ist eine Einstellung der überhöhten Spannung $U_0$ im Betriebszustand „Lampe nicht gezündet" erforderlich, so kann zusätzlich in Reihe zu C1 bzw. C2 jeweils ein strombegrenzendes Bauelement (z.B. ein Widerstand R1 bzw. R2) eingefügt werden (siehe Fig. 3): Mit diesem kann (entsprechend der Belastung durch z.B. die Zündeinrichtung) die Spannungsüberhöhung in den Grenzen

$$2 \sqrt{2}\, U_{Netz\_eff} \geq U_0 > \sqrt{2}\, U_{Netz\_eff}$$

eingestellt werden. Es gilt :

$$U_0 = 2 \sqrt{2}\, U_{Netz\_eff} ,$$

für R1 und R2 gegen Null gehend. Andererseits gilt

$$U_0 = \sqrt{2}\, U_{Netz\_eff} ,$$

für R1 und R2 gegen ∞ gehend, bei $I_L$ gegen Null.

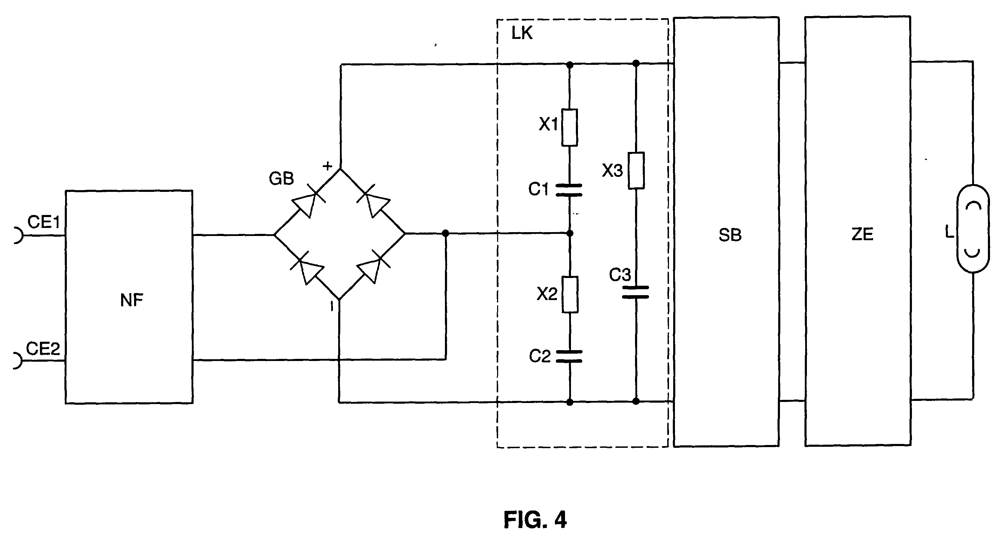

Auch die Kapazität C3 kann zur Begrenzung des Stroms (Einstellung des Übernahmestromes) und der Spannung mit einer Reihenschaltung eines strombegrenzenden Bauelementes (z.B. ein Widerstand X3) versehen werden. In Fig. 4 ist dieser Widerstand X3 zusammen mit Widerständen X1 und X2, die den anderen Teilkapazitäten C1 und C2 im grundlegenden Lastkreis LK zugeordnet sind, gezeigt.

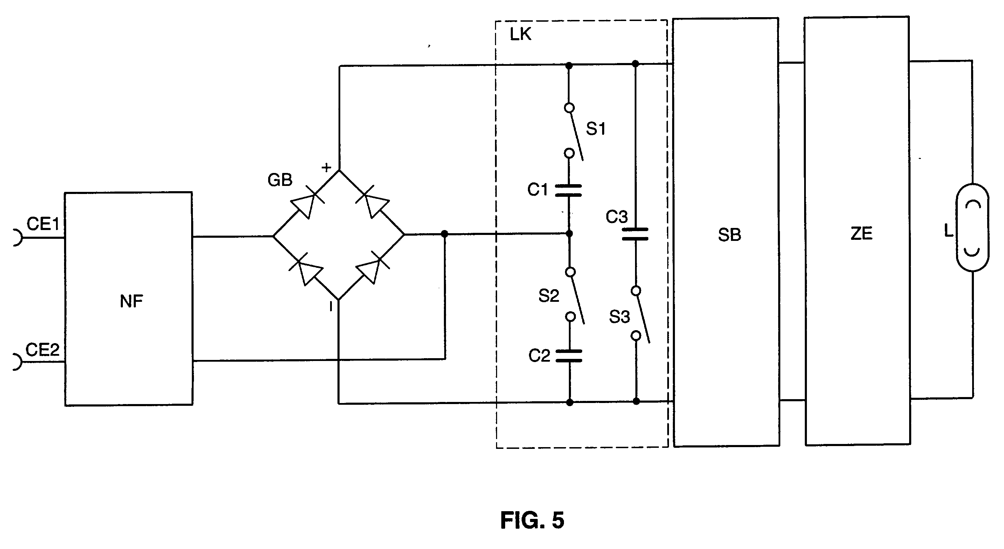

U.U. ist es sinnvoll, die Kondensatoren in bestimmten EVG-Betriebszuständen (beispielsweise zur Reduzierung des Oberwellengehaltes nach erfolgter Lampenübernahme und/oder EVG-Abschaltung am Ende der Lampenlebensdauer, etc.) aus dem Strompfad herauszuschalten. Dieses kann durch Reihenschaltung entsprechender Schaltelemente S1 bis S3 zu den Teilkapazitäten C1 bis C3 geschehen, siehe Fig. 5. Als Schaltelemente eignen sich Thyristoren, Triacs und Transistoren. Diese können auch in Kombination verwendet werden.

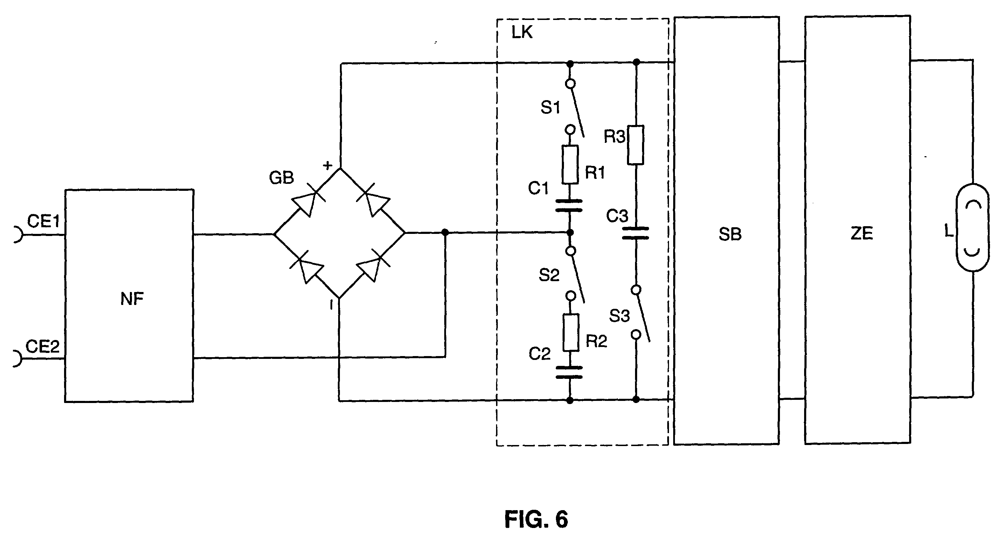

Die Schaltelemente S1 bis S3 können auch zusammen mit strombegrenzenden Bauelementen, R1 bis R3, verwendet werden, siehe Fig. 6.

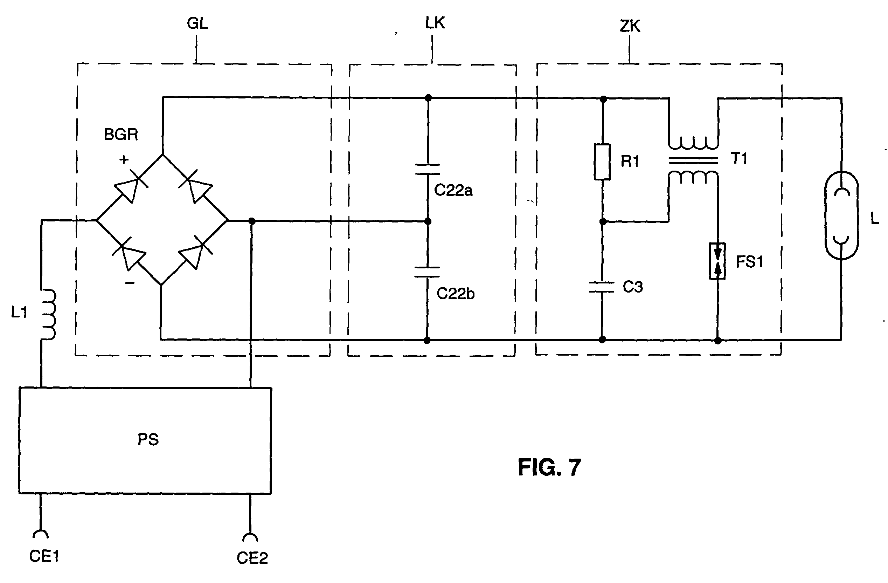

Fig. 7 zeigt ein weiteres Ausführungsbeispiel mit entsprechender Spannungsverdopplungsschaltung zur Erhöhung der Übernahmespannung. Die Strombegrenzung erfolgt bei dieser Anordnung nicht im Gleichstromkreis mittels einer nachfolgenden Halbbrücke o.ä., sondern im Wechselstrompfad, also vor der Gleichrichtungseinheit GL mittels Grätz-Brückengleichrichter BGR (beispielsweise Typ DB 1000). Dabei wird eine übliche Vorschaltinduktivität L1 verwendet. Des weiteren ist durch eine an sich bekannte Phasenanschnittsteuerung PS (beispielsweise mit Triac) die Einstellung der Lampenleistung möglich. Die im Gleichstrompfad befindliche Zündeinrichtung ZK ist als Überlagerungskreis ausgebildet und beinhaltet neben dem Zündübertrager T1 und einer Funkenstrecke FS1 ein RC-Netzwerk, bestehend aus R1, C3.

Bei nicht gezündeter Lampe wird C3 über R1 durch einen Ladekreis LK mit der über C22a und C22b abfallenden Spannung geladen (Spannungsverdopplung). Bei Erreichen der Durchbruchspannung von FS1 zündet diese durch und erzeugt mittels T1 einen Zündimpuls für die Entladungslampe L. Zwischen den Elektroden des Entladungsgefäßes steht nun die Spannung von C22a und C22b (entsprechend der doppelten Netzspitzenspannung) zur Verfügung.

Die anderen Bestandteile dieser Schaltung entsprechen denen in den vorherigen Figuren. Die Schaltungsanordnung gemäß Figur 7 gestattet die einfache Zündung und den Gleichstrombetrieb von Entladungslampen, wie er beispielsweise bei Natriumhochdrucklampen ohne amalgamhaltige Füllung angewendet werden kann.

Typisch haben die beiden Kondensatoren im Ladekreis (C22a und C22b bzw. C1 und C2) eine Kapazität von 0,68 µF.

**Patentansprüche**

1.  Schaltungsanordnung zur Zündung und zum Betrieb von Hochdrucklampen, mit einem Zündnetzwerk und einem Betriebsnetzwerk einschließlich eines strombegrenzenden Elements, wobei der Entladungslampe (L) eine erhöhte Übernahmespannung zur Verfügung gestellt wird, dadurch gekennzeichnet, daß die erhöhte Übernahmespannung durch Spannungsverdopplung an einer Gleichrichtereinheit (GB) mittels eines in zwei einzelne Teil-Kondensatoren (C1, C2) aufgetrennten Ladekondensators (LK) erzeugt wird, wobei der gemeinsame Mittelpunkt (M) der beiden Teil-Kondensatoren (C1, C2) mit einem der beiden Netzeingänge der Gleichrichtereinheit (GB) verbunden ist.

2.  Schaltungsanordnung nach Anspruch 1 , dadurch gekennzeichnet, daß die Gleichrichtereinheit (GB) eine Grätzschaltung ist.

3.  Schaltungsanordnung nach Anspruch 1 , dadurch gekennzeichnet, daß die erhöhte Übernahmespannung maximal das Doppelte der gleichgerichteten Netzwechselspannung beträgt.

4.  Schaltungsanordnung nach Anspruch 1, dadurch gekennzeichnet, daß eine zusätzliche Kapazität (C3) parallel zu den beiden Teil-Kapazitäten (C1 und C2) so eingefügt ist, daß einer seiner Pole mit dem positiven Potential und der andere Pol mit dem negativen Potential der Zwischenkreisspannung $U_o$ am Ausgang der Gleichrichtereinheit kontaktiert ist.

5.  Schaltungsanordnung nach Anspruch 1 oder 4, dadurch gekennzeichnet, daß in Reihe zu den jeweiligen Teilkapazitäten C1 und/oder C2 und/oder Zusatzkapazität C3 des Ladekondensators (LK) ein Schaltelement (S1, S2, S3) angeordnet ist.

6.  Schaltungsanordnung nach Anspruch 5, dadurch gekennzeichnet, daß als Schaltelement(e) ein Thyristor und/oder Triac und/oder Transistor Anwendung findet.

**7.** Schaltungsanordnung nach Anspruch 1 oder 4, dadurch gekennzeichnet, daß mindestens einer der Teilkapazitäten C1 und/oder C2 und/oder der zusätzlichen Kapazität C3 des Ladekreises LK ein strombegrenzendes Bauelement (X1, X2, X3) in Reihe geschaltet ist.

**8.** Schaltungsanordnung nach Anspruch 1, dadurch gekennzeichnet, daß die Hochdruckentladungslampe als Füllung Natrium und Xenon mit sehr hohem Kaltfülldruck enthält, insbesondere mit mindestens 1 atm.

**9.** Schaltungsanordnung nach Anspruch 1, dadurch gekennzeichnet, daß die Anordnung weiter eine Phasenanschnittsschaltung (PS), vorzugsweise mittels Triac oder Thyristor, enthält.

**10.** Schaltungsanordnung nach Anspruch 1, dadurch gekennzeichnet, daß die Zündeinrichtung als Überlagerungskreis ausgebildet ist.

**11.** Schaltungsanordnung nach Anspruch 1, dadurch gekennzeichnet, daß das strombegrenzende Element als Brückenschaltung mit Hochfrequenzinduktivität ausgebildet ist, die sich nach der Spannungsverdopplerschaltung (LK) befindet.

**12.** Schaltungsanordnung nach Anspruch 1, dadurch gekennzeichnet, daß die Anordnung ein oder mehrere strombegrenzende Bauelemente (L1) vor der Gleichrichtereinheit besitzt.

FIG. 1

FIG. 2

FIG. 3

FIG. 4

**FIG. 5**

CE1 CE2 NF GB LK C1 C2 C3 S1 S2 S3 SB ZE L

EP 1 054 580 A1

FIG. 6

FIG. 7

## EUROPÄISCHER RECHERCHENBERICHT

Europäisches Patentamt

**Nummer der Anmeldung**

EP 00 10 7631

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 289 993 A (HARPER CLARENCE E ET AL) 15. September 1981 (1981-09-15) * Spalte 4, Zeile 43 - Spalte 4, Zeile 64; Abbildung 4 * | 1-4 | H05B41/231 |
| X | US 4 712 170 A (GRACE ALAN G V) 8. Dezember 1987 (1987-12-08) * Spalte 6, Zeile 39 - Spalte 6, Zeile 49; Abbildung 1 * | 1-4 | |
| X | US 5 159 244 A (POULSON DANIEL A) 27. Oktober 1992 (1992-10-27) * Spalte 3, Zeile 39 - Spalte 4, Zeile 27; Abbildung 1 * | 1-4 | |
| X | US 4 692 667 A (NILSSEN OLE K) 8. September 1987 (1987-09-08) * Spalte 2, Zeile 41 - Spalte 2, Zeile 55; Abbildung 1 * | 1-4 | |
| X | US 5 309 065 A (NUCKOLLS JOE A ET AL) 3. Mai 1994 (1994-05-03) * Spalte 2, Zeile 17 - Spalte 3, Zeile 2; Abbildung 1 * | 1-4 | RECHERCHIERTE SACHGEBIETE (Int.Cl.7) H05B |

Der vorliegende Recherchenbericht wurde für alle Patentansprüche erstellt

| Recherchenort | Abschlußdatum der Recherche | Prüfer |
|---|---|---|
| MÜNCHEN | 12. Juli 2000 | Villafuerte Abrego |

## ANHANG ZUM EUROPÄISCHEN RECHERCHENBERICHT
## ÜBER DIE EUROPÄISCHE PATENTANMELDUNG NR.

EP 00 10 7631

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2000

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 4289993 | A | 15-09-1981 | AU | 536156 | B | 19-04-1984 |
| | | | AU | 5916480 | A | 08-01-1981 |
| | | | CA | 1158710 | A | 13-12-1983 |
| | | | DE | 3024520 | A | 22-01-1981 |
| | | | FR | 2460586 | A | 23-01-1981 |
| | | | GB | 2052190 | A,B | 21-01-1981 |
| | | | IT | 1146158 | B | 12-11-1986 |
| | | | JP | 56009996 | A | 31-01-1981 |
| | | | MX | 147763 | A | 10-01-1983 |
| | | | NL | 8003512 | A | 31-12-1980 |
| | | | SE | 8004349 | A | 30-12-1980 |
| US 4712170 | A | 08-12-1987 | US | 4651271 | A | 17-03-1987 |
| US 5159244 | A | 27-10-1992 | KEINE | | | |
| US 4692667 | A | 08-09-1987 | KEINE | | | |
| US 5309065 | A | 03-05-1994 | AT | 162357 | T | 15-01-1998 |
| | | | CA | 2109197 | A | 27-08-1993 |
| | | | DE | 69224061 | D | 19-02-1998 |
| | | | EP | 0581912 | A | 09-02-1994 |
| | | | JP | 6509677 | T | 27-10-1994 |
| | | | WO | 9317534 | A | 02-09-1993 |

EPO FORM P0461

Für nähere Einzelheiten zu diesem Anhang : siehe Amtsblatt des Europäischen Patentamts, Nr. 12/82